# EUROPÄISCHE PATENTANMELDUNG

(11) **EP 4 178 166 A2**
(43) Veröffentlichungstag der Anmeldung: **10.05.2023**
(21) Anmeldenummer: 22204237.6
(22) Anmeldetag: 27.10.2022
(51) Int. Cl.: H04L 12/40, B60R 16/023

(54) **ADAPTEREINHEIT UND VERFAHREN ZUM ANKOPPELN EINER AUSWERTEEINHEIT AN EINEN DATENBUS SOWIE SYSTEM UND FAHRZEUG MIT ENTSPRECHENDER ADAPTEREINHEIT**

(30) Priorität: 03.11.2021 DE 102021128638
(71) Anmelder: OptiMEAS Measurement and Automation Systems GmbH, 61381 Friedrichsdorf (DE)
(72) Erfinder: Kessel, Jens-Achim, 64807 Dieburg (DE); Schranz, Burkhard, 8477 Oberstammheim (CH); Langfeld, Patrick, 76149 Karlsruhe (DE)
(74) Vertreter: Patentanwälte Bauer Vorberg Kayser

(57) **Zusammenfassung**

Es ist eine Adaptereinheit (3) zum Ankoppeln einer Auswerteeinheit (4) an einen Datenbus (2) offenbart, wobei über den Datenbus (2) in Bussignale (11) kodierte Busdaten übertragbar sind. Die Adaptereinheit (3) umfasst:
einen Buseingang (9), der zum Empfangen eines Bussignals (11) aus dem Datenbus (2) ausgebildet ist,
eine Koppeleinheit (5) mit einer primärseitigen Leiterstruktur (15) und einer sekundärseitigen Leiterstruktur (16), wobei zumindest ein Teil der primärseitigen Leiterstruktur (15) und zumindest ein Teil der sekundärseitigen Leiterstruktur (16) eine Koppelkapazität bilden und wobei die Koppelkapazität derart ausgebildet ist, dass ein Bussignal (11) an dem Buseingang (9) von der primärseitigen Leiterstruktur (15) auf die sekundärseitige Leiterstruktur (16) überkoppelt,
eine Signalaufbereitungseinheit (6), die dazu ausgebildet ist, ein auf die sekundärseitige Leiterstruktur (16) übergekoppeltes Bussignal (12) aufzubereiten,
eine Dekodiereinheit (7), die dazu ausgebildet ist, Busdaten, die in einem durch die Signalaufbereitungseinheit (6) aufbereiteten Bussignal (13) kodiert sind, zu dekodieren, und
ein Schnittstellenmodul (8), das dazu ausgebildet ist, durch die Dekodiereinheit (7) dekodierte Busdaten (14) an die Auswerteeinheit (4) auszugeben.

Es ist ferner ein System (1) und ein Fahrzeug mit einer entsprechenden Adaptereinheit (3) und ein entsprechendes Verfahren offenbart.

## Beschreibung

Die vorliegende Offenbarung betrifft eine Adaptereinheit zum Ankoppeln einer Auswerteeinheit an einen Datenbus, vorzugsweise einen Datenbus in einem Fahrzeug, besonders bevorzugter Weise einen Datenbus in einem Schienenfahrzeug. Die vorliegende Offenbarung betrifft ferner ein System und ein Fahrzeug mit einer derartigen Adaptereinheit sowie ein entsprechendes Verfahren.

Datenbusse dienen dem Austausch von Daten zwischen mehreren Teilnehmern des Busses. Die Daten werden dabei in Bussignale kodiert und die Bussignale über ein Busmedium (Kupferkabel, Lichtwellenleiter, etc.) übertragen. Meist erfolgt der Zugriff auf das Busmedium mittels TDMA - Time Division Multiple Access -, weshalb immer nur ein Teilnehmer Daten in den Datenbus senden darf. Ansonsten überschneiden sich die Bussignale der verschiedenen sendenden Teilnehmer und die Datenübertragungen stören sich gegenseitig. Bei einigen Bustechnologien wird eine Sendeberechtigung von einem Master an die Teilnehmer vergeben. Dies kann durch Freigabe einzelner Buszugriffe, durch Zuordnen fester Zeitschlitze für die Teilnehmer, durch Vergabe von Sendekanälen und/oder dergleichen erfolgen. Bei anderen Bustechnologien hören Teilnehmer in den Bus hinein und beginnen zu senden, wenn keine Busaktivität erkennbar ist. Sobald eine Kollision von Datenübertragungen mehrerer Teilnehmer möglich ist, sind Mechanismen zur Kollisionserkennung üblich. Wenn eine Kollision erkannt wird, wird geeignet auf die erkannte Kollision reagiert, beispielsweise wird der Sendevorgang abgebrochen und zu einem späteren Zeitpunkt erneut gestartet.

Da ein einziger nicht-konformer Teilnehmer - je nach Ausgestaltung des Datenbusses - die gesamte Buskommunikation stören kann, ist es von Bedeutung, dass sich jeder Teilnehmer des Busses an die jeweiligen Vorgaben hält. Je höher die Sicherheitsanforderungen an eine Kommunikation über den Bus sind, desto wichtiger ist das Einhalten der Vorgaben. Derartige sicherheitsrelevante Busse kommen beispielsweise bei Fahrzeugen zum Einsatz. Teilnehmer, die mit einem derartigen Datenbus verbunden werden sollen, müssen daher meist einen aufwändigen Zertifizierungsprozess durchlaufen, bevor diese für den Betrieb an dem Datenbus zugelassen sind. Bei Schienenfahrzeugen ist der Zertifizierungsaufwand besonders hoch.

Bei vielen Datenbussen gelten diese Anforderungen lediglich für Teilnehmer, die Daten in den Bus senden sollen. Ein Mithören ist meist unproblematisch, da das Mithören üblicherweise die Buskommunikation nicht oder allenfalls vernachlässigbar beeinträchtigt. Entsprechend kann bei mithörenden Teilnehmern eine Zertifizierung entfallen oder deutlich vereinfacht werden, indem beispielsweise lediglich eine Rückwirkungsfreiheit des Teilnehmers auf den Bus nachgewiesen wird.

Bei derartigen mithörenden Teilnehmern werden meist Bussignale aus dem Datenbus ausgekoppelt und dem Teilnehmer zugeleitet. Bei Datenbussen, bei denen die Bussignale elektrisch übertragen werden, ist in der Praxis ein induktives oder kapazitives Auskoppeln gebräuchlich. Dennoch ist auch diese mithörende Teilnahme nicht unproblematisch. Denn eine möglichst geringe Rückwirkung eines Teilnehmers auf einen Datenbus bedeutet üblicherweise auch eine möglichst niedrige Koppelinduktivität bzw. Koppelkapazität, wodurch sich Herstellungstoleranzen, unterschiedliche Installationssituationen und/oder andere Rahmenbedingungen erheblich auf die Qualität von ausgekoppelten Bussignalen und deren Verwendbarkeit auswirken können.

Die US 2009/0279645 A1 offenbart eine Vorrichtung, die an Leitungen eines Datenbusses (beispielsweise die eines CAN - Controller Area Network - Busses) geklippt werden kann. Die über die Busleitungen übertragenen elektrischen Bussignale koppeln kapazitiv auf Elektroden der Vorrichtung über und werden in einer Schaltung rekonstruiert. Die derart rekonstruierten Bussignale werden einem lesenden Busteilnehmer zugeleitet. Nachteilig an dieser Vorrichtung ist, dass für das Anbringen der Vorrichtung die meist verdrillten Busleitungen entdrillt werden müssen, wodurch die Kanaleigenschaften der Busleitung lokal verändert werden. Ferner hängt die kapazitive Kopplung zwischen Busleitung und Elektroden von vielen Faktoren ab, beispielsweise der Dicke der Isolierung der Busleitungen, die Art und Qualität der Anbringung der Vorrichtung an der Busleitung, die Entfernung der Vorrichtung von dem sendenden Teilnehmer, die Nähe zu schirmenden bzw. ableitenden Flächen, etc. Dadurch variieren die Übertragungseigenschaften von Installation zu Installation erheblich.

Der vorliegenden Offenbarung liegt die Aufgabe zugrunde, eine Adaptereinheit, ein System, ein Fahrzeug und ein Verfahren bereitzustellen, mit dem eine Auswerteeinheit möglichst flexibel und universell an einen Datenbus ankoppelbar ist, wobei eine möglichst geringe Beeinflussung der Kanaleigenschaften des Busses und eine von verschiedenen Installationssituationen weitgehend unabhängiges Verhalten erstrebenswert ist.

Diese Aufgabe ist durch eine Adaptereinheit mit den Merkmalen des Anspruchs 1 gelöst. Danach ist die Adaptereinheit zum Ankoppeln einer Auswerteeinheit an einen Datenbus ausgebildet, vorzugsweise einen Datenbus in einem Fahrzeug, besonders bevorzugter Weise einen Datenbus in einem Schienenfahrzeug, wobei über den Datenbus in Bussignale kodierte Busdaten übertragbar sind. Diese Adaptereinheit umfasst:
einen Buseingang, der zum Verbinden der Adaptereinheit mit dem Datenbus und zum Empfangen eines Bussignals aus dem Datenbus ausgebildet ist,
eine Koppeleinheit mit einer primärseitigen Leiterstruktur und einer sekundärseitigen Leiterstruktur, wobei die primärseitige Leiterstruktur mit dem Buseingang verbunden ist, wobei zumindest ein Teil der primärseitigen Leiterstruktur und zumindest ein Teil der sekundärseitigen Leiterstruktur eine Koppelkapazität bilden und wobei die Koppelkapazität derart ausgebildet ist, dass ein Bussignal an dem Buseingang von der primärseitigen Leiterstruktur auf die sekundärseitige Leiterstruktur überkoppelt,
eine Signalaufbereitungseinheit, die dazu ausgebildet ist, ein auf die sekundärseitige Leiterstruktur übergekoppeltes Bussignal aufzubereiten,
eine Dekodiereinheit, die dazu ausgebildet ist, Busdaten, die in einem durch die Signalaufbereitungseinheit aufbereiteten Bussignal kodiert sind, zu dekodieren, und
ein Schnittstellenmodul, das dazu ausgebildet ist, durch die Dekodiereinheit dekodierte Busdaten an die Auswerteeinheit auszugeben.

Hinsichtlich eines Systems ist diese Aufgabe durch die Merkmale des Anspruchs 13, hinsichtlich eines Fahrzeugs durch die Merkmale des Anspruchs 14 und hinsichtlich eines Verfahrens durch die Merkmale des Anspruchs 15 gelöst.

Weitere Ausgestaltungen sind in den Unteransprüchen offenbart.

Es sei darauf hinzuweisen, dass die in den Ansprüchen einzeln aufgeführten Merkmale in beliebiger, technisch sinnvoller Weise miteinander kombiniert werden können und weitere Ausgestaltungen der vorliegenden Offenbarung aufzeigen. Die Beschreibung charakterisiert und spezifiziert die vorliegende Offenbarung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung des offenbarten Gegenstands lediglich das erste Merkmal vorhanden sein kann, in einer zweiten Ausgestaltung lediglich das zweite Merkmal und in einer dritten Ausgestaltung sowohl das erste als auch das zweite Merkmal.

Es ist erkannt worden, dass eine Adaptereinheit dann besonders universell einsetzbar ist und den Bus möglichst wenig beeinflusst, wenn die Kopplung von Bussignalen zwischen Bus und Adaptereinheit auf nachvollziehbare und deterministische Weise erfolgt. Daher umfasst die Adaptereinheit der vorliegenden Offenbarung eine Koppeleinheit mit einer primärseitigen Leiterstruktur und einer sekundärseitigen Leiterstruktur. Die Adaptereinheit wird über einen Buseingang mit dem Datenbus verbunden. Dieser Buseingang ist wiederum mit der primärseitigen Leiterstruktur verbunden. Dadurch können auf dem Datenbus übertragene Bussignale in die Koppeleinheit und auf die primärseitige Leiterstruktur gelangen. Die primärseitige Leiterstruktur und die sekundärseitige Leiterstruktur sind derart angeordnet und ausgebildet, dass eine kapazitive Kopplung zwischen zumindest einem Teil der primärseitigen Leiterstruktur und zumindest einem Teil der sekundärseitigen Leiterstruktur entsteht. Dadurch können Bussignale über eine derart gebildete Koppelkapazität in definierter Weise auf die sekundärseitige Leiterstruktur überkoppeln. Da diese Koppeleinheit in allen Installationssituationen dieselben Koppeleigenschaften aufweist, ist der Betrieb der Adaptereinheit im Wesentlichen von der Installationssituation unabhängig.

Ein übergekoppeltes Bussignal, das von dem in den Buseingang eingegebenen Bussignal herrührt und auf die sekundärseitige Leiterstruktur kapazitiv übergekoppelt ist, wird in eine Signalaufbereitungseinheit eingegeben. Dort wird das übergekoppelte Bussignal aufbereitet und dadurch ein aufbereitetes Bussignal erzeugt.

Das aufbereitete Bussignal wird in eine Dekodiereinheit eingegeben, die in dem aufbereiteten Bussignal kodierte Busdaten dekodiert und daraus dekodierte Busdaten erzeugt und ausgibt. Die dekodierten Busdaten werden in ein Schnittstellenmodul eingegeben, das die dekodierten Busdaten an die Auswerteeinheit ausgeben kann. Auf diese Weise können über den Datenbus übertragene Busdaten aus dem Datenbus in deterministischer Weise ausgekoppelt werden und auf verschiedenste Weise einer Auswerteeinheit zugeleitet werden. Durch die Nutzung eines separaten Schnittstellenmoduls sind die an die Auswerteeinheit ausgegebenen Busdaten äußerst flexibel nutzbar und weitgehend von dem eingesetzten Datenbus unabhängig. Dies ermöglicht auch einen Schnittstellenwechsel, was wiederum einen besonders universellen Einsatz ermöglicht. Generell bietet eine derartige Adaptereinheit einen transparenten und im Wesentlichen rückwirkungsfreien Zugriff auf den Datenbus. Durch den universellen Aufbau kann die Adaptereinheit in bestehende Datenbusse nachgerüstet werden, was die Einsetzbarkeit der Adaptereinheit noch universeller werden lässt.

Eine "Auswerteeinheit", die mit der Adaptereinheit verbunden werden kann, kann durch verschiedenste lesende Endgeräte gebildet sein. Eine derartige Auswerteeinheit kann die empfangenen Busdaten auf verschiedenste Weise auswerten, wobei das "Auswerten" im weitesten Sinne verstanden werden kann. Dieses "Auswerten" kann beispielsweise ein Abspeichern empfangener Busdaten im Sinne eines Datenloggers umfassen. Die Auswerteeinheit kann ein dauerhaftes Monitoring des Datenbusses und der dort übertragenen Kommunikation durchführen. Es kann eine Interpretation der Busdaten und des Kommunikationsverhaltens des Busses vorgenommen und dessen Teilnehmer überwacht werden. Es ist auch denkbar, dass die Auswerteeinheit die empfangenen Busdaten für eine Fehlersuche nutzt, wenn beispielsweise eine Busnachricht eines Busteilnehmers nicht bei einem anderen Busteilnehmer ankommt. Diese kurze, nicht abschließende und insbesondere nicht beschränkend zu betrachtende Aufzählung denkbarer Auswerteeinheiten zeigt, wie universell die Adaptereinheit eingesetzt werden kann.

Der "Datenbus" kann durch verschiedenste Busse gebildet sein. Wichtig ist, dass über den Datenbus Busdaten übertragen und diese für eine Auswerteeinheit zugänglich gemacht werden können. Dabei können die verschiedensten Busmedien eingesetzt werden, die verschiedenste Übertragungen ermöglichen, beispielsweise elektrisch, optisch, per Funk, etc.

Gleichzeitig kann der Zugriff auf den Bus auf verschiedenste Weise realisiert sein. Beispielhaft sei TDMA - Time Division Multiple Access -, FDMA - Frequency Division Multiple Access - und CDMA - Code Division Multiple Access - genannt. Die Bussignale können verschiedentlich moduliert sein, beispielsweise mittels PSK - Phase Shift Keying -, FSK - Frequency Shift Keying - oder ASK - Amplitude Shift Keying -, um auch hier lediglich einige denkbare Modulationsarten zu nennen. Üblicherweise wird die jeweils verwendete Bustechnologie die jeweilige Übertragung definieren oder zumindest auf eine gewisse Anzahl von Optionen reduzieren.

Abhängig von der Ausgestaltung des Datenbusses dürfte auch der "Buseingang" ausgestaltet sein. Dies kann beispielsweise eine Anpassung an das jeweils eingesetzte Busmedium beinhalten. Wenn der Datenbus beispielsweise ein Kupferkabel als Busmedium nutzt, sollte der Buseingang zum Verbinden mit diesem Kupferkabel ausgestaltet sein. Wenn der Datenbus einen Lichtwellenleiter, beispielsweise eine Glasfaser, nutzt, sollte der Buseingang zum Verbinden mit diesem Lichtwellenleiter ausgebildet sein. Entsprechend empfiehlt es sich, wenn der Buseingang eine angepasste Anzahl von Polen aufweist. Wenn der Datenbus beispielsweise zwei verdrillte Drähte zur Übertragung der Bussignale nutzt, sollte der Buseingang zwei Pole aufweisen. Nicht selten werden bei Datenbussen die einzelnen Busteilnehmer hintereinandergeschaltet, sodass ein Busteilnehmer sowohl einen Anschluss zu dem vorhergehenden Busteilnehmer als auch einen Anschluss zu einem nachfolgenden Busteilnehmer aufweist. Entsprechend kann auch der Buseingang derartige Anschlüsse für vorhergehende und nachfolgende Busteilnehmer aufweisen. Diese nicht abschließende Auflistung zeigt, auf welche Weise beispielsweise eine Anpassung zwischen Datenbus und Buseingang erfolgen kann.

"Bussignale" können prinzipiell alle Signale sein, die über einen Datenbus übertragen werden und in denen Busdaten kodiert sein können. Je nach Ausgestaltung des Busmediums dürften sich auch die Bussignale unterscheiden. So kann bei einem optischen Busmedium das Bussignal ein Laserstrahl sein, der in seiner Intensität moduliert wird. Bei einem Kupferkabel als Busmedium kann das Bussignal ein elektrisches Signal sein. Ohne Beschränkung der Allgemeinheit wird nachfolgend davon ausgegangen, dass das Bussignal ein elektrisches Signal ist. Dabei kann das elektrische Signal direkt auf dem Bus übertragen werden. Allerdings ist auch denkbar, dass optische Signale, elektromagnetische Signale oder dergleichen für die Übertragung der Busdaten über den Bus genutzt werden. Da derartige Signale für die weitere Bearbeitung üblicherweise in elektrische Signale gewandelt werden, stellt die Annahme eines Bussignals als elektrisches Signal keine Beschränkung der Allgemeinheit dar. Die Bussignale können auf unterschiedliche Weise kodiert sein, unterschiedlichste Pegel annehmen oder unterschiedlichste Frequenzen nutzen, um lediglich einige Beispiele zu nennen.

Auch die "primärseitige Leiterstruktur" und die "sekundärseitige Leiterstruktur" können auf verschiedentliche Arten realisiert sein. Wichtig ist, dass sich zwischen zumindest Teilen dieser Leiterstrukturen eine Koppelkapazität ausbildet, d.h. ein Bereich, in dem ein elektrisches Signal von der primärseitigen Leiterstruktur mittels eines elektrischen Felds in die sekundärseitige Leiterstruktur überkoppeln kann. Diese Voraussetzung lässt sich auf verschiedene, aus der Praxis bekannte Weisen realisieren.

Dabei kann die gesamte primärseitige Leiterstruktur und die gesamte sekundärseitige Leiterstruktur diese Koppelkapazität bilden. Es ist aber auch denkbar, dass lediglich ein Teilabschnitt der primärseitigen Leiterstruktur und/oder der sekundärseitigen Leiterstruktur zum Bilden dieser Koppelkapazität beitragen, wobei verbleibende Teile beispielsweise als Zuleitung für die Teilabschnitte der Koppelkapazität dienen. Der zumindest eine Teil der primärseitigen Leiterstruktur und der zumindest eine Teil der sekundärseitigen Leiterstruktur können sich dabei relativ beliebig erstrecken. In einer Ausgestaltung sind die Teile durch gerade Leiterabschnitte gebildet. In einer anderen Ausgestaltung sind die Teile gebogen, beispielsweise als Kreisbogen, als Ausschnitt einer Ellipse oder als sonstige gebogene Kurve. Dabei kann es sich anbieten, dass die primärseitige Leiterstruktur und die sekundärseitige Leiterstruktur keine ausgeprägten Ecken aufweisen, um beispielsweise bei höheren Frequenzen des Bussignals eine elektromagnetische Abstrahlung zu reduzieren oder gar zu vermeiden.

Die primärseitige Leiterstruktur und/oder die sekundärseitige Leiterstruktur können in einer Ausgestaltung jeweils durch einen einzelnen Leiter gebildet sein. In einer anderen Ausgestaltung umfasst die primärseitige Leiterstruktur und/oder die sekundärseitige Leiterstruktur mehrere parallel geschaltete Leiter, von denen jeweils mindestens ein Teil der Leiterstruktur einen Beitrag zu der Koppelkapazität leisten kann.

Bei elektrischen Datenbussen kann das Busmedium durch zwei Leiter aufgespannt sein, über die das Bussignal differenziell aufgeprägt wird. Bei Verwendung derartiger mehrteiliger Busmedien kann auch die primärseitige Leiterstruktur und/oder die sekundärseitige Leiterstruktur mehrteilig aufgebaut sein. Bei einem Busmedium mit einem ersten Busleiter und einem zweiten Busleiter kann die primärseitige Leiterstruktur einen ersten primärseitigen Leiterabschnitt und einen zweiten primärseitigen Leiterabschnitt aufweisen. Der erste Busleiter kann dann mit dem ersten primärseitigen Leiterabschnitt und der zweite Busleiter mit dem zweiten primärseitigen Leiterabschnitt verbunden sein. Entsprechend würde auch die sekundärseitige Leiterstruktur einen ersten sekundärseitigen Leiterabschnitt und einen zweiten sekundärseitigen Leiterabschnitt umfassen, wobei der erste primärseitige Leiterabschnitt und der erste sekundärseitige Leiterabschnitt eine erste Koppelkapazität bilden und der zweite primärseitige Leiterabschnitt und der zweite sekundärseitige Leiterabschnitt eine zweite Koppelkapazität. Auf diese Weise kann das Signal an dem ersten Busleiter auf den ersten sekundärseitigen Leiterabschnitt und das Signal an dem zweiten Busleiter auf den zweiten sekundärseitigen Leiterabschnitt überkoppeln. Die Signale an den beiden sekundärseitigen Leiterabschnitten können dann beispielsweise mit einem Differenzverstärker abgegriffen und verstärkt werden.

Das "Schnittstellenmodul" ist dazu ausgebildet, dekodierte Busdaten an die Auswerteeinheit auszugeben. Die Ausgabe der dekodierten Busdaten dürfte üblicherweise über eine entsprechend ausgebildete Schnittstelle erfolgen. Die Adaptereinheit kann daher eine entsprechende Ausgabeschnittstelle aufweisen. Das Schnittstellenmodul gibt die dekodierten Daten dann - geeignet kodiert - über die Ausgabeschnittstelle an die Auswerteeinheit aus. Die Ausgabeschnittstelle kann dabei trennbar ausgebildet sein. Hierfür kann eine Steckerverbindung vorgesehen sein.

Die Adaptereinheit kann auf verschiedenste Weise implementiert sein. Eine Implementierung durch reine Hardware ist ebenso denkbar wie eine Implementierung in reiner Software. Vorzugsweise ist die Adaptereinheit jedoch durch eine Kombination von Software und Hardware implementiert. Dabei kann ein Mikroprozessor, ein Mikrocontroller und/oder ein anderer programmierbarer Logikbaustein (beispielsweise FPGA - Field Programmable Gate Array -, CPLD - Complex Programmable Logic Device -, ASIC - Application Programmable Integrated Circuit -, etc.) zum Einsatz kommen.

In einer Ausgestaltung sind der zumindest eine Teil der primärseitigen Leiterstruktur und der zumindest eine Teil der sekundärseitigen Leiterstruktur, die gemeinsam die Koppelkapazität bilden, durch parallele Leiter gebildet. Diese parallelen Leiter können durch parallel verlaufende Geradenstücke gebildet sein. Als "parallele Leiter" in diesem Sinne können aber auch Kurven angesehen werden, die in einem annähernd gleichen Abstand zueinander verlaufen. So können beispielsweise Kreisbogen mit einem gleichen Mittelpunkt und unterschiedlichen Radien parallele Leiter bilden. Parallele Leiter bieten den Vorteil, dass eine Koppelkapazität mit gut steuer- und berechenbarem Kapazitätswert entstehen kann.

In einer Ausgestaltung sind der zumindest eine Teil der primärseitigen Leiterstruktur und der zumindest eine Teil der sekundärseitigen Leiterstruktur, die gemeinsam die Koppelkapazität bilden, durch Leiter auf einer Platine gebildet, wobei die Leiter vorzugsweise auf unterschiedlichen Ebenen der Platine angeordnet sind. Leiter auf einer Platine bieten den Vorteil, dass ihre relative Lage zumindest in einer Richtung durch die Platine eindeutig definiert ist. Dies kann die Herstellung der Koppelkapazität vereinfachen. Wenn die Leiter auf unterschiedlichen Ebenen der Platine angeordnet sind, ergibt sich zudem der Vorteil, dass die Leiter besser eine Koppelkapazität bilden können. Denn die Leiter auf einer Platine sind meist breiter als dick, sodass sich besser elektrische Felder zwischen den Leitern ausbilden können. Wenn die Platine auf mehr als zwei Ebenen Leiter aufweist, kann zudem die Feldverteilung besser gesteuert und eventuell - je nach Anordnung der Leiter - eine Abschirmung gegenüber externen Einstreuungen erreicht werden.

In einer Ausgestaltung weist die Koppelkapazität einen Kapazitätswert auf, der so klein ist, dass ein über den Bus übertragenes Bussignal durch die Koppelkapazität im Wesentlichen unbeeinflusst bleibt. Wie hoch der Kapazitätswert konkret ist, hängt üblicherweise von dem eingesetzten Datenbus, der Länge des Datenbusses, der konkret verwendeten Übertragungstechnik und vielen weiteren Faktoren ab. In einer Weiterbildung ist der Kapazitätswert im Pikofarad-Bereich.

In einer Ausgestaltung weist die Koppelkapazität einen Kapazitätswert zwischen 0,1 Pikofarad und 10 Pikofarad, vorzugsweise zwischen 1 Pikofarad und 5 Pikofarad auf. Diese Werte liefern beispielsweise bei einem MVB gute Ergebnisse und können eine ausreichend gute Überkopplung des Bussignals in die sekundärseitige Leiterstruktur erreichen.

In einer Ausgestaltung weist die Signalaufbereitungseinheit einen Filter, einen Verstärker und/oder einen Analog-Digital-Wandler auf. Dabei ist der Filter vorzugsweise ein Bandpassfilter. Der Filter kann dazu eingesetzt werden, in das Bussignal eingekoppelte Störungen zu reduzieren. Ein Bandpassfilter kann dabei das erwartete Spektrum des Bussignals isolieren. Ein Verstärker kann das eingekoppelte Bussignal, das einen relativ niedrigen Pegel aufweisen dürfte, verstärken. Der Verstärker kann auch als Differenzverstärker ausgebildet sein, der eine Differenz zwischen zwei eingegebenen Signalen - beispielsweise zwischen dem zuvor angeführten ersten sekundärseitigen Leiterabschnitt und dem zweiten sekundärseitigen Leiterabschnitt - verstärkt. Ein Filter kann vor dem Verstärker und/oder nach dem Verstärker angeordnet sein. Ein Analog-Digital-Wandler kann aus dem analogen Bussignal ein digitales Signal erzeugen, das in der Dekodiereinheit dann digital verarbeitet werden kann.

In einer Ausgestaltung wird das übergekoppelte Bussignal in den Verstärker eingegeben, erzeugt der Verstärker durch Verstärkung des übergekoppelten Bussignals ein verstärktes Bussignal, das in den Analog-Digital-Wandler eingegeben wird, und erzeugt der Analog-Digital-Wandler durch Digitalisierung des verstärkten Bussignals ein digitalisiertes Bussignal, wobei das digitalisierte Bussignal als positive Rückkopplung in den Verstärker eingegeben wird. Diese Ausgestaltung bietet den Vorteil, dass die Aufbereitung des übergekoppelten Bussignals deutlich verbessert werden kann. Denn durch diese besondere Verschaltung können die Bedingungen einer Übertragung und eventuelle Störungen besser erkannt werden. Durch kapazitive Auskopplung des Bussignals gehen gewisse Informationen verloren, beispielsweise der jeweilige Spannungspegel, ein Ruhepegel, eine genaue Spannungsdifferenz und/oder andere Bedingungen der Übertragung. Nach der Koppeleinheit sind im Wesentlichen lediglich Informationen über Änderungen des Bussignals verfügbar. Dadurch ist eine Unterscheidung schwieriger, ob eine Pegeländerung oder eine Störung empfangen worden ist. Für eine Rekonstruktion der Busdaten ist diese Unterscheidung aber von Interesse, bei Störungen insbesondere, ob eine Gleichtakt- oder eine Gegentaktstörung vorliegt. Bei Datenbussen, die ein Leitungspaar zur Übertragung nutzen, beispielsweise RS485, RS422, ProfiBus, CAN-Bus, Ethernet oder MVB, wirken sich Gleichtaktstörungen auf beide Busleitungen aus, sodass ein differentielles Signal nicht beeinflusst wird. Gegentaktstörungen wirken sich jedoch auf ein differentielles Signal aus, wodurch wiederum Dateninhalte gestört werden können. Eine Rückkopplung eines zuletzt erkannten Signalpegels kann die Störfestigkeit deutlich verbessern und das Erkennen von Startbedingungen einer Übertragung beschleunigen.

In einer Ausgestaltung ist die Dekodiereinheit auf die Kodierung des Bussignals des Busses angepasst und führt vorzugsweise eine Manchester-Dekodierung, eine Frame-Erkennung, eine Fehlererkennung und/oder eine Fehlerbehebung durch. Durch diese Anpassung können die verschiedenen Bestandteile der Dekodiereinheit noch bessere Ergebnisse liefern. Eine Frame-Erkennung kann insbesondere bei Datenbussen interessant sein, bei denen die Busdaten in Datenrahmen - sogenannte Frames - übertragen werden. Wenn ein Frame erkannt wird, begünstigt dies die Dekodierung der Busdaten. Eine Fehlererkennung kann fehlerhaft übermittelte Busdaten erkennen. Da die Adaptereinheit üblicherweise lediglich in die Buskommunikation hineinhört und keinen Sendekanal nutzt, kann der Quelle der fehlerhaft übermittelten Busdaten nicht mitgeteilt werden, dass Daten fehlerhaft übermittelt worden sind. Diese Information kann dennoch sinnvoll genutzt werden. Denn fehlerhafte Daten sind eventuell durch eine Fehlerbehebung korrigierbar, die fehlerhaft übermittelten Busdaten werden möglicherweise auch bei der Senke fehlerbehaftet angekommen und erneut angefragt, fehlerhaft empfangene Busdaten liefern eventuell Informationen für die verbundene Auswerteeinheit, beispielsweise hinsichtlich eines Erkennens einer generell fehlerhaften Buskommunikation, etc.

In einer Ausgestaltung umfasst die Adaptereinheit einen Zeitgeber und einen Zeitstempler, wobei der Zeitgeber eine Zeitreferenz liefert und wobei der Zeitstempler dazu ausgebildet ist, dekodierte Busdaten unter Nutzung der Zeitreferenz mit einem Zeitstempel zu versehen. Ein Zeitgeber ermöglicht es, eine Zeitreferenz zu halten, ohne dass eine dauerhafte Kommunikationsverbindung zu einem externen Zeitgeber vorhanden sein muss. Zur Synchronisation des Zeitgebers kann dennoch ein externer Zeitgeber erreichbar sein, mit dessen Hilfe die Zeitreferenz des Zeitgebers eingestellt werden kann. Entsprechende externe Zeitgeber könnten beispielsweise ein Zeitsender nach DCF77, ein NTP - Network Time Procotol - Server oder dergleichen sein. Der Zeitstempler erlaubt, dekodierte Busdaten in einen zeitlichen Kontext zu setzen. Dies kann beispielsweise bei einer Fehleranalyse der Busdaten durch die Auswerteeinheit hilfreich sein. Der Zeitstempel, den der Zeitstempler erzeugt, basiert auf der Zeitreferenz des Zeitgebers und würde in einem Datensatz an die dekodierten Busdaten angehängt. Dieser Datensatz kann dann abgespeichert und/oder über das Schnittstellenmodul an die Auswerteinheit ausgegeben werden.

In einer Ausgestaltung weist die Adaptereinheit einen Speicher auf, der dazu ausgebildet ist, dekodierte Busdaten und gegebenenfalls zugehörige Zeitstempel zu speichern und vorzugsweise für eine spätere Ausgabe über das Schnittstellenmodul an die Auswerteeinheit bereitzuhalten, wobei der Speicher vorzugsweise als FIFO - First In First Out - und/oder als Ringspeicher ausgebildet ist. Die Nutzung eines Speichers für dekodierte Busdaten ermöglicht es, Daten zwischenzuspeichern, die beispielsweise nicht unmittelbar verwendet oder versendet werden (können) und/oder für eine gewisse Zeitspanne noch vorgehalten werden sollen. Eine Zwischenspeicherung ist beispielsweise auch dann sinnvoll, wenn die Daten an die Auswerteeinheit komprimiert werden soll und damit eine gewisse Menge an dekodierten Busdaten für die Komprimierung vorhanden sein müssen. Die Nutzung eines FIFO hat den Vorteil, dass die zeitliche Reihenfolge der dekodierten Busdaten erhalten bleibt. Bei einem Ringspeicher werden Speicherelemente des Ringspeichers in einem Ring beschrieben, d.h. wenn das "letzte" Speicherelement beschrieben worden ist, wird zu dem "ersten" Speicherelement zurückgekehrt und der dortige Inhalt überschrieben. Dadurch wird der Ringspeicher zyklisch befüllt und ein dediziertes Löschen von Speicherelementen oder ein Verschieben von Speicherinhalten kann vermieden werden. Bei Verwendung des Ringspeichers kann ein Schreibezeiger für Schreibzugriffe und ein Lesezeiger für Lesezugriffe genutzt werden.

In einer Ausgestaltung ist das Schnittstellenmodul zum Bereitstellen einer seriellen Schnittstelle ausgebildet, wobei die serielle Schnittstelle vorzugsweise durch USB - Universal Serial Bus - gebildet ist. Das Schnittstellenmodul kann die verschiedensten Schnittstellen für das Verbinden der Auswerteeinheit bereitstellen. Bei vielen Einsatzszenarien dürfte von Bedeutung sein, dass die Datenrate des Datenbusses gleich oder kleiner als die Datenrate der Schnittstelle zur Auswerteeinheit ist, da sonst bei voller Auslastung des Datenbusses die Daten nicht schnell genug an die Auswerteeinheit weitergeleitet werden können. In der Praxis stellt dies aber selten eine Hürde dar. Das Nutzen einer seriellen Schnittstelle bietet den Vorteil, dass der Verdrahtungsaufwand zwischen Adaptereinheit und Auswerteeinheit gering ist. Das Nutzen von USB bietet den Vorteil einer universell unterstützten und Plug-and-Play-fähigen Schnittstelle, die in verschiedenen Versionen verfügbar ist und Datenraten bis in den Gigabit-pro-Sekunden-Bereich unterstützt.

In einer Ausgestaltung ist der Datenbus, für den der Buseingang ausgebildet ist, durch einen Feldbus gebildet, vorzugsweise einen Fahrzeugbus, besonders bevorzugter Weise durch MVB - Multifunction Vehicle Bus - oder CAN - Controller Area Network -. Feldbusse sind etablierte Bustechnologien, mit denen verschiedene Sensoren, Aktoren, Steuergeräte und/oder weitere Geräte kommunizierend miteinander verbunden werden können. Insbesondere im Fahrzeugbereich besteht immer wieder der Bedarf, Busdaten für eine Auswerteeinheit auszukoppeln, sodass die Adaptereinheit der vorliegenden Offenbarung dort einen besonderen Mehrwert liefert. MVB ist ein wichtiger Vertreter eines Feldbusses in Schienenfahrzeugen. CAN ist ein wichtiger Vertreter eines Feldbusses in Kraftfahrzeugen, insbesondere Autos.

In einer Ausgestaltung kann die Adaptereinheit lediglich Bussignale über den Buseingang empfangen, jedoch keine Bussignale in den Buseingang senden. Dies bedeutet, dass die Adaptereinheit in dieser Ausgestaltung lediglich einen Empfangskanal aufweist, aber keinen Sendekanal. In den meisten Ausgestaltungen dürfte/n die Koppelkapazität/en der Koppeleinheit einen derart kleinen Kapazitätswert aufweisen, dass die Adaptereinheit keine verwertbaren Bussignale in den Datenbus senden kann. In vielen Anwendungsfällen ist dies ohnehin nicht erwünscht oder sogar zu vermeiden. Daher kann es sich anbieten, wenn die Adaptereinheit lediglich Bussignale empfangen, aber nicht versenden kann. Dadurch ist ein versehentliches Versenden von Bussignalen verhindert und gleichzeitig können unnötige Software- und/oder Hardware-Komponenten entfallen, was die Kosten der Adaptereinheit reduzieren kann. Wenn die Adaptereinheit für eine Schienenanwendung nach EN 61375 ausgebildet ist, wäre in dieser Ausgestaltung die Adaptereinheit ein Gerät der Geräteklasse 0, d.h. das Gerät ist an der Kommunikation nicht aktiv beteiligt. Die API - Application Programming Interface - der EN 61375 kann dabei entfallen und kann in der Adaptereinheit nicht implementiert sein.

In einer Ausgestaltung weist die Adaptereinheit eine Simulationseinheit auf, wobei die Simulationseinheit dazu ausgebildet ist, ein Testbussignal zu erzeugen und der Dekodiereinheit oder dem Buseingang zuzuleiten, und wobei das Testbussignal in einem Bussignal kodierte Busdaten und/oder ein Störsignal umfasst. Das Testbussignal kann auf die Signalaufbereitungseinheit und/oder direkt der Dekodiereinheit und/oder dem Buseingang aufschaltbar sein. Auf diese Weise kann das Verhalten der Adaptereinheit und/oder einer angeschlossenen Auswerteeinheit auf spezielle Störsignale simuliert werden. Zum Sicherstellen einer Rückwirkungsfreiheit der Adaptereinheit kann die Simulationseinheit als geschlossene Schleife ausgebildet sein. Das bedeutet, dass die Simulationseinheit für andere Komponenten der Adaptereinheit reale Abläufe abbildet, aber keine Einwirkungen auf den realen Datenbus hat. Die Simulationseinheit dient damit rein internen Zwecken.

In einer Ausgestaltung sind die Dekodiereinheit und/oder weitere Einheiten der Adaptereinheit in einer programmierbaren Logikschaltung implementiert, wobei der programmierbare Logikschaltung vorzugsweise durch einen FPGA - Field Programmable Gate Array - einen ASIC - Application Specific Integrated Circuit - oder einen CPLD - Complex Programmable Logic Device - gebildet ist. Auf diese Weise lässt sich die Verarbeitung innerhalb der Adaptereinheit parallelisieren und dadurch beschleunigen.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: ein Blockdiagramm mit Funktionsblöcken eines Ausführungsbeispiels eines Systems gemäß der vorliegenden Offenbarung,
- Fig. 2: ein Schaltbild mit verschiedenen Funktionsblöcken eines Ausführungsbeispiels einer Adaptereinheit gemäß der vorliegenden Offenbarung und
- Fig. 3: ein Flussdiagram mit Schritten eines Ausführungsbeispiels eines Verfahrens gemäß der vorliegenden Offenbarung.
In den unterschiedlichen Figuren sind hinsichtlich ihrer Funktion gleichwertige Teile stets mit denselben Bezugszeichen versehen, sodass diese in der Regel auch nur einmal beschrieben werden. Sofern in einer Figur gleichwertige Teile mehrfach vorhanden sind, sind die entsprechenden Bezugszeichen mit Strichen versehen, um eine Unterscheidbarkeit zu erleichtern. Diese Striche weisen jedoch nicht zwingend auf abweichende Ausgestaltungen hin.

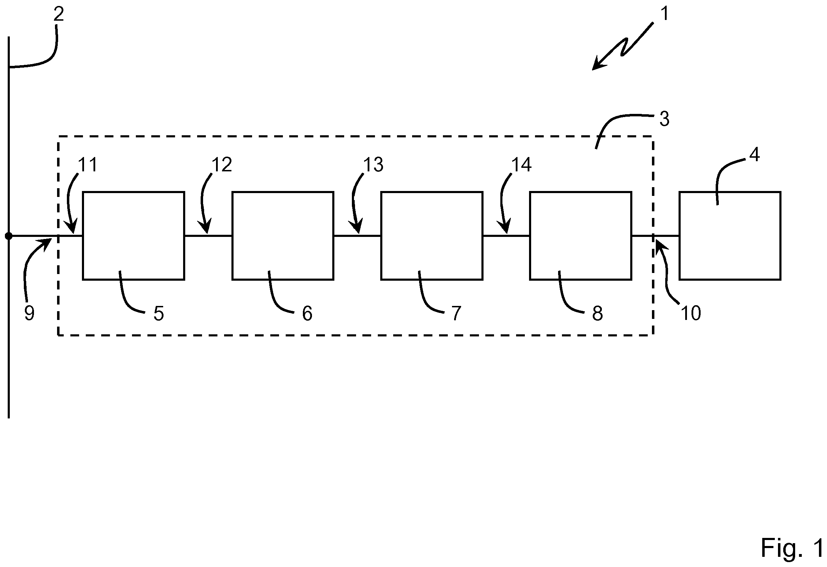

Fig. 1 zeigt eine schematische Darstellung eines Ausführungsbeispiels eines Systems 1 gemäß der vorliegenden Offenbarung. Das System 1 umfasst einen vereinfacht dargestellten Datenbus 2 (in dem vorliegenden Ausführungsbeispiel einen MVB), eine Adaptereinheit 3 und eine Auswerteeinheit 4. Die Adaptereinheit 3 umfasst eine Koppeleinheit 5, eine Signalaufbereitungseinheit 6, eine Dekodiereinheit 7 und ein Schnittstellenmodul 8. Die Adaptereinheit 3 weist ferner einen Buseingang 9 und eine Ausgabeschnittstelle 10 auf, die in dem vorliegenden Ausführungsbeispiel durch USB gebildet ist.

Der Buseingang 9 ist mit dem Datenbus 2 verbunden, wodurch ein über den Datenbus 2 übertragenes Bussignal 11 in den Buseingang 9 und damit in die Adaptereinheit 3 gelangen kann. Ein in den Buseingang 9 eingegebenes Bussignal 11 wird in die Koppeleinheit 5 eingegeben, in der aus dem Bussignal 11 mittels einer Koppelkapazität (hier nicht dargestellt) ein übergekoppeltes Bussignal 12 erzeugt wird. Das übergekoppelte Bussignal 12 wird in die Signalaufbereitungseinheit 6 eingegeben und dort durch Aufbereitung des übergekoppelten Bussignals 12 ein aufbereitetes Bussignal 13 erzeugt und in die Dekodiereinheit 7 eingegeben. Die Dekodiereinheit 7 dekodiert in dem Bussignal 11 kodierte Busdaten und gibt die derart gewonnenen dekodierten Busdaten 14 an das Schnittstellenmodul 8 aus.

Das Schnittstellenmodul 8 bereitet die dekodierten Busdaten 14 für die Ausgabe über die Ausgabeschnittstelle 10 an die Auswerteeinheit 4 auf. Auf diese Weise können in Bussignalen kodierte Busdaten an eine Auswerteeinheit 4 ausgegeben werden, ohne dass die Auswerteeinheit 4 oder die Adaptereinheit 3 eine Rückwirkung auf den Datenbus 2 haben muss. Ferner kann ein Schnittstellenwechsel vorgenommen werden und die Ausgabeschnittstelle 10 durch USB (oder eine andere Schnittstelle) gebildet sein.

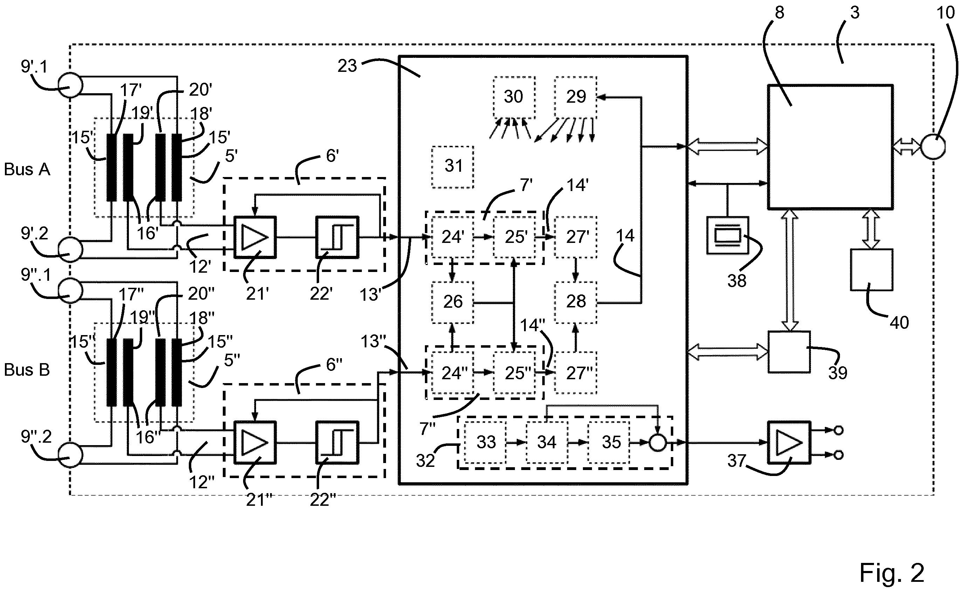

Fig. 2 zeigt eine detailliertere Darstellung eines Ausführungsbeispiels einer Adaptereinheit 3. Die Adaptereinheit 3 weist in dieser Ausgestaltung zwei Busanschlüsse auf, was in Fig. 2 mit "Bus A" und "Bus B" kenntlich gemacht ist. Die beiden Busse A und B sind dabei als wechselseitige Redundanz ausgebildet. Für jeden der beiden Busanschlüsse ist ein Buseingang 9' bzw. 9" vorhanden. Jeder der Buseingänge 9' und 9" weisen jeweils zwei Anschlüsse auf, die ein Einschleifen in den Bus ermöglichen. Dabei kann der Anschluss 9'.1 bzw. 9".1 mit einem vorhergehenden Busteilnehmer (nicht eingezeichnet) und der Anschluss 9'.2 bzw. 9".2 mit einem nachfolgenden Busteilnehmer (ebenfalls nicht eingezeichnet) verbunden sein. Jeder der Anschlüsse 9'.1, 9'.2, 9".1 und 9".2 weist jeweils zwei Pole auf, was durch zwei von dem skizzierten Anschluss abgehende Linien kenntlich gemacht ist. Wenn das Busmedium beispielsweise durch ein verdrilltes Leitungspaar gebildet ist, kann eine Leitung des Busmediums mit dem einen Pol und die andere Leitung des Busmediums mit dem anderen Pol verbunden sein.

Die Buseingänge 9' und 9" sind jeweils mit einer Koppeleinheit 5' bzw. 5" verbunden, wobei jede dieser Koppeleinheiten 5' und 5" eine primärseitige Leiterstruktur 15' bzw. 15" und eine sekundärseitige Leiterstruktur 16' bzw. 16" aufweist. Es ist zu erkennen, dass die primärseitigen Leiterstrukturen 15' und 15" jeweils einen ersten primärseitigen Leiterabschnitt 17' bzw. 17" und einen zweiten primärseitigen Leiterabschnitt 18' bzw. 18" und die sekundärseitigen Leiterstrukturen 16' bzw. 16" einen ersten sekundärseitigen Leiterabschnitt 19' bzw. 19" und einen zweiten sekundärseitigen Leiterabschnitt 20' bzw. 20" aufweisen. Diese Leiterabschnitte 17, 18, 19, 20 sind jeweils als verdickte, parallel angeordnete Geradenstücke eingezeichnet, sind Teil der jeweiligen Leiterstruktur 15, 16 und bilden jeweils paarweise eine Koppelkapazität, nämlich der erste primärseitige Leiterabschnitt 17' bzw. 17" mit dem ersten sekundärseitigen Leiterabschnitt 18' bzw. 18" und der zweite primärseitige Leiterabschnitt 19' bzw. 19" mit dem zweiten sekundärseitigen Leiterabschnitt 20' bzw. 20". Dies bedeutet, dass die Koppeleinheiten 5' und 5" der Fig. 2 gemeinsam insgesamt vier Koppelkapazitäten aufweist. Die Leiterabschnitte 17, 18, 19, 20 können durch Leiterbahnen auf einer Platine gebildet sein, wobei die Leiterbahnen auf vier verschiedenen Ebenen der Platine angeordnet sein können.

Von der Koppeleinheit 5' bzw. 5" werden die übergekoppelten (und differenzierten) Bussignale 12' und 12" jeweils als differenzielle Signale in eine Signalaufbereitungseinheit 6' bzw. 6" eingegeben. Die Signalaufbereitungseinheit 6' bzw. 6" umfasst jeweils einen Verstärker 21' bzw. 21" mit variablen, gesteuertem Bias und einen Analog-Digital-Wandler 22' bzw. 22". Der Verstärker 21' bzw. 21" verstärkt jeweils die differenziellen Bussignale 12' und 12". Der Ausgang des Analog-DigitalWandlers 22' bzw. 22" wird jeweils auf den Verstärker 21' bzw. 21" zurückgekoppelt, wodurch der Bias des verstärkten Signals abhängig von einem erkannten Bit angepasst wird. Das derart aufbereitete übergekoppelte Bussignal 12' bzw. 12" wird jeweils als aufbereitetes Bussignal 13' bzw. 13" in einen FPGA - Field Programmable Gate Array - 23 eingegeben, in dem unter anderem einzelne Einheiten der Adaptereinheit 3 implementiert sind.

Das aufbereitete Bussignal 13' bzw. 13" wird in eine Dekodiereinheit 7' bzw. 7" eingegeben. In einem Funktionsblock 24' bzw. 24" der Dekodiereinheit 7' bzw. 7" wird jeweils eine Manchester-Dekodierung, eine Frameerkennung und eine Fehlerbehandlung auf Bit-Ebene (insbesondere eine Fehlererkennung und eine eventuelle Fehlerbehebung) durchgeführt. In einem weiteren Funktionsblock 25' bzw. 25" der Dekodiereinheit 7' bzw. 7" werden jeweils die in dem Bussignal erkannten Datenrahmen verarbeitet und auf diese Weise jeweils dekodierte Busdaten 14' bzw. 14" erzeugt und ausgegeben. Hierbei können eine Fehlererkennung mittels CRC - Cyclic Redudancy Checking - und/oder Timeouts und/oder eine Filterung auf Fehler, bestimmte Botschaftstypen, Absender, Adressaten oder sonstige Kriterien vorgenommen werden. In Funktionsblock 26 kann eine Bewertung des Zeitverhaltens der Datenübertragungen über die beiden redundanten Datenbusse (Bus A, Bus B) vorgenommen werden.

Die dekodierten Busdaten 14' bzw. 14" werden in einen Speicher 27' bzw. 27" eingegeben, der jeweils als Ringspeicher ausgebildet ist und dekodierte Busdaten 14' bzw. 14" für die spätere Übertragung über das Schnittstellenmodul 8 an die Auswerteeinheit 4 bereithält. Eine Auswahleinheit 28 ist mit den beiden Speichern 27' und 27" verbunden und wählt für jeweils auszugebende dekodierte Busdaten 14' bzw. 14" jeweils den Datenbus (Bus A, Bus B) aus, über den ein empfangenes Datenframe in besserer Qualität empfangen worden ist, beispielsweise weniger Fehler enthielt. Wenn Bus A und Bus B vollständig redundante Datenbusse sind und über beide Datenbusse identische Bussignale übertragen werden, wählt die Auswahleinheit 28 - im Idealfall - lediglich einen Satz von dekodierten Busdaten aus zwei identischen Kopien aus. Auch wenn dieser Idealfall praktisch nicht vorliegen wird, können dennoch die durch die Auswahleinheit 28 ausgegebenen Daten als "dekodierte Busdaten 14" im Sinne der vorliegenden Offenbarung angesehen werden. Diese dekodierten Busdaten 14 werden zum einen für eine Ausgabe an der Ausgabeschnittstelle 10 dem Schnittstellenmodul 8, zum anderen einer zentralen Steuerlogik 29 übergeben, die in dem FPGA 23 implementierte Funktionseinheiten steuert. Der FPGA 23 umfasst ferner eine zentrale Statuslogik 30, die Statusinformationen innerhalb des FPGAs 23 speichert und gegebenenfalls an einer nicht eingezeichneten Anzeige, beispielsweise mehrere LEDs - Licht Emittierende Diode -, ausgibt. Der FPGA 23 umfasst ferner RAM 31 - Random Access Memory - für verschiedene Informationen, beispielsweise Filterinformationen.

In dem FPGA 23 ist ferner eine Simulationseinheit 32 implementiert, die einen Speicher 33, eine Wiedergabelogik 34, einen Kodierer 35 (beispielsweise ein Manchester-Encoder) und ein Koppelglied 36 aufweist. In Speicher 33, der beispielsweise als RAM ausgebildet sein kann, sind Testsequenzen abgespeichert, die eine Basis für das Erzeugen eines Testbussignals bilden. Die Wiedergabelogik 34 lädt die benötigten Daten aus dem Speicher 33 und erzeugt daraus Busdaten sowie ein Störsignal. Die Busdaten werden in den Kodierer 35 eingegeben und daraus ein Bussignal erzeugt, das zusammen mit dem Störsignal durch das Koppelglied 36 zu dem Testbussignal kombiniert wird. Dieses Testbussignal wird über einen Pegelumsetzer 37 derart umgesetzt, dass das Testbussignal intern in der Adaptereinheit als Bussignal weiterverarbeitet werden kann. Dieses Testbussignal kann beispielsweise intern an die Dekodiereinheit 7', 7" geführt oder extern über einen Testadapter an die Buseingänge 9' und 9" angelegt werden.

In der Adaptereinheit 3, gemäß Fig. 2, sind noch weitere Funktionseinheiten vorhanden, nämlich ein zentraler Taktgeber 38 zur Ausgabe eines Systemtakts, ein EEPROM - Electronically Eraseable Read Only Memory - 39 für Code für das FPGA 23 und ein EEPROM 40 für Informationen für die Ausgangsschnittstelle 10, beispielsweise für USB Meta-Informationen.

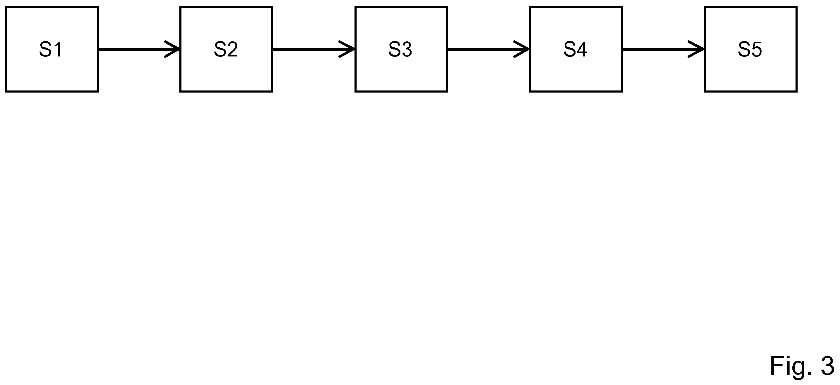

Fig. 3 zeigt ein Flussdiagram mit Schritten eines Ausführungsbeispiels eines Verfahrens gemäß der vorliegenden Offenbarung. Bei diesem Verfahren wird zunächst in Schritt S1 ein Bussignal 11 aus dem Datenbus 2 mittels der Koppeleinheit 5 empfangen. In Schritt S2 erzeugt die Koppeleinheit 5 ein übergekoppeltes Bussignal 12 aus dem empfangenen Bussignal 11. In Schritt S3 wird durch die Signalaufbereitungseinheit 6 aus dem übergekoppelten Bussignal 12 ein aufbereitetes Bussignal 13 erzeugt. In Schritt S4 werden dekodierte Busdaten 14 durch die Dekodiereinheit 7 aus dem aufbereiteten Bussignal 13 erzeugt. In Schritt S5 werden die dekodierten Busdaten 14 via Schnittstellenmodul 8 an die Auswerteeinheit 4 ausgegeben.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

### Bezugszeichenliste

- 1: System
- 2: Datenbus
- 3: Adaptereinheit
- 4: Auswerteeinheit
- 5: Koppeleinheit
- 6: Signalaufbereitungseinheit
- 7: Dekodiereinheit
- 8: Schnittstellenmodul
- 9: Buseingang
- 10: Ausgabeschnittstelle
- 11: Bussignal
- 12: Übergekoppeltes Bussignal
- 13: Aufbereitetes Bussignal
- 14: Dekodierte Busdaten
- 15: Primärseitige Leiterstruktur
- 16: Sekundärseitige Leiterstruktur
- 17: Erster primärseitiger Leiterabschnitt
- 18: Zweiter primärseitiger Leiterabschnitt
- 19: Erster sekundärseitiger Leiterabschnitt
- 20: Zweiter sekundärseitiger Leiterabschnitt
- 21: Verstärker
- 22: Analog-Digital-Wandler
- 23: FPGA
- 24: Funktionsblock der Dekodiereinheit
- 25: Funktionsblock der Dekodiereinheit
- 26: Funktionsblock für Redundanzbewertung
- 27: Speicher
- 28: Auswahleinheit
- 29: Zentrale Steuerlogik
- 30: Zentrale Statuslogik
- 31: RAM
- 32: Simulationseinheit
- 33: Speicher
- 34: Wiedergabelogik
- 35: Kodierer
- 36: Koppelglied
- 37: Pegelumsetzer
- 38: Zentraler Taktgeber
- 39: EEPROM für FPGA Code
- 40: EEPROM für USB-Informationen

## Patentansprüche

1. Adaptereinheit zum Ankoppeln einer Auswerteeinheit an einen Datenbus, vorzugsweise einen Datenbus in einem Fahrzeug, besonders bevorzugter Weise einen Datenbus in einem Schienenfahrzeug, wobei über den Datenbus (2) in Bussignale (11) kodierte Busdaten übertragbar sind, umfassend:
einen Buseingang (9), der zum Verbinden der Adaptereinheit (3) mit dem Datenbus (2) und zum Empfangen eines Bussignals (11) aus dem Datenbus (2) ausgebildet ist,
eine Koppeleinheit (5) mit einer primärseitigen Leiterstruktur (15) und einer sekundärseitigen Leiterstruktur (16), wobei die primärseitige Leiterstruktur (15) mit dem Buseingang (9) verbunden ist, wobei zumindest ein Teil der primärseitigen Leiterstruktur (15) und zumindest ein Teil der sekundärseitigen Leiterstruktur (16) eine Koppelkapazität bilden und wobei die Koppelkapazität derart ausgebildet ist, dass ein Bussignal (11) an dem Buseingang (9) von der primärseitigen Leiterstruktur (15) auf die sekundärseitige Leiterstruktur (16) überkoppelt,
eine Signalaufbereitungseinheit (6), die dazu ausgebildet ist, ein auf die sekundärseitige Leiterstruktur (16) übergekoppeltes Bussignal (12) aufzubereiten,
eine Dekodiereinheit (7), die dazu ausgebildet ist, Busdaten, die in einem durch die Signalaufbereitungseinheit (6) aufbereiteten Bussignal (13) kodiert sind, zu dekodieren, und
ein Schnittstellenmodul (8), das dazu ausgebildet ist, durch die Dekodiereinheit (7) dekodierte Busdaten (14) an die Auswerteeinheit (4) auszugeben.

2. Adaptereinheit nach Anspruch 1, **dadurch gekennzeichnet, dass** der zumindest eine Teil der primärseitigen Leiterstruktur (15) und der zumindest eine Teil der sekundärseitigen Leiterstruktur (16), die gemeinsam die Koppelkapazität bilden, durch parallele Leiter und/oder durch Leiter auf einer Platine gebildet sind, wobei bei Leiter auf einer Platine die Leiter vorzugsweise auf unterschiedlichen Ebenen der Platine angeordnet sind.

3. Adaptereinheit nach Anspruch 1 oder 2, **dadurch gekennzeichnet, dass** die Koppelkapazität einen Kapazitätswert aufweist, der so klein ist, dass ein über den Bus (2) übertragenes Bussignal (11) durch die Koppelkapazität im Wesentlichen unbeeinflusst bleibt, und/oder dass die Koppelkapazität einen Kapazitätswert zwischen 0,1 Pikofarad und 10 Pikofarad, vorzugsweise zwischen 1 Pikofarad und 5 Pikofarad aufweist.

4. Adaptereinheit nach einem der Ansprüche 1 bis 3, **dadurch gekennzeichnet, dass** die Signalaufbereitungseinheit (6) einen Filter, vorzugsweise einen Bandpassfilter, einen Verstärker (21) und/oder einen Analog-Digital-Wandler (22) aufweist, dass das übergekoppelte Bussignal (12) in den Verstärker (21) eingegeben wird, dass der Verstärker (21) durch Verstärkung des übergekoppelten Bussignals (12) ein verstärktes Bussignal erzeugt, das in den Analog-Digital-Wandler (22) eingegeben wird, und dass der Analog-Digital-Wandler (22) durch Digitalisierung des verstärkten Bussignals ein digitalisiertes Bussignal erzeugt, wobei das digitalisierte Bussignal als positive Rückkopplung in den Verstärker (21) eingegeben wird.

5. Adaptereinheit nach einem der Ansprüche 1 bis 4, **dadurch gekennzeichnet, dass** die Dekodiereinheit (7) auf die Kodierung des Bussignals des Busses angepasst ist und vorzugsweise eine Manchester-Dekodierung, eine Frame-Erkennung, eine Fehlererkennung und/oder eine Fehlerbehebung durchführt.

6. Adaptereinheit nach einem der Ansprüche 1 bis 5, **dadurch gekennzeichnet, dass** die Adaptereinheit (3) einen Zeitgeber und einen Zeitstempler umfasst, wobei der Zeitgeber eine Zeitreferenz liefert und wobei der Zeitstempler dazu ausgebildet ist, dekodierte Busdaten (14) unter Nutzung der Zeitreferenz mit einem Zeitstempel zu versehen.

7. Adaptereinheit nach einem der Ansprüche 1 bis 6, **dadurch gekennzeichnet, dass** die Adaptereinheit (3) einen Speicher (27) aufweist, der dazu ausgebildet ist, dekodierte Busdaten (14) und gegebenenfalls zugehörige Zeitstempel zu speichern und vorzugsweise für eine spätere Ausgabe über das Schnittstellenmodul (8) an die Auswerteeinheit (4) bereitzuhalten, wobei der Speicher (27) vorzugsweise als FIFO - First In First Out - und/oder als Ringspeicher ausgebildet ist.

8. Adaptereinheit nach einem der Ansprüche 1 bis 7, **dadurch gekennzeichnet, dass** das Schnittstellenmodul (8) zum Bereitstellen einer seriellen Schnittstelle ausgebildet ist, wobei die serielle Schnittstelle vorzugsweise durch USB - Universal Serial Bus - gebildet ist.

9. Adaptereinheit nach einem der Ansprüche 1 bis 8, **dadurch gekennzeichnet, dass** der Datenbus (2), für den der Buseingang (9) ausgebildet ist, durch einen Feldbus, vorzugsweise einen Fahrzeugbus, besonders bevorzugter Weise durch MVB - Multifunction Vehicle Bus - oder CAN - Controller Area Network -, gebildet ist.

10. Adaptereinheit nach einem der Ansprüche 1 bis 9, **dadurch gekennzeichnet, dass** die Adaptereinheit (3) lediglich Bussignale über den Buseingang (9) empfangen, jedoch keine Bussignale in den Buseingang (9) senden kann.

11. Adaptereinheit nach einem der Ansprüche 1 bis 10, **dadurch gekennzeichnet, dass** die Adaptereinheit (3) eine Simulationseinheit (32) aufweist, wobei die Simulationseinheit (32) dazu ausgebildet ist, ein Testbussignal zu erzeugen und der Dekodiereinheit (7) oder dem Buseingang (9) zuzuleiten, und wobei das Testbussignal in einem Bussignal kodierte Busdaten und/oder ein Störsignal umfasst.

12. Adaptereinheit nach einem der Ansprüche 1 bis 11, **dadurch gekennzeichnet, dass** die Dekodiereinheit (7) und/oder weitere Einheiten der Adaptereinheit (3) in einer programmierbaren Logikschaltung (23) implementiert sind, wobei die programmierbare Logikschaltung vorzugsweise durch einen FPGA - Field Programmable Gate Array -, einen ASIC - Application Specific Integrated Circuit - oder einen CPLD - Complex Programmable Logic Device - gebildet ist.

13. System umfassend einen Datenbus, eine Adaptereinheit nach einem der Ansprüche 1 bis 12 und eine Auswerteeinheit, wobei der Buseingang (9) der Adaptereinheit (3) mit dem Bus (2) und das Schnittstellenmodul (8) der Adaptereinheit (3) mit der Auswerteeinheit (4) kommunizierend verbunden ist.

14. Fahrzeug, vorzugsweise Schienenfahrzeug, umfassend eine Adaptereinheit (3) nach einem der Ansprüche 1 bis 12 und/oder ein System (1) nach Anspruch 13.

15. Verfahren zum Ankoppeln einer Auswerteeinheit an einen Datenbus, vorzugsweise einen Datenbus in einem Fahrzeug, besonders bevorzugter Weise einen Datenbus in einem Schienenfahrzeug, unter Verwendung einer Adaptereinheit (3) nach einem der Ansprüche 1 bis 12 und/oder einem System (1) nach Anspruch 13, umfassend:
Empfangen (S1) eines Bussignals (11) aus dem Datenbus (2) mittels einer Koppeleinheit (5), wobei in dem Bussignal (11) Busdaten kodiert sind,
Erzeugen (S2) eines übergekoppelten Bussignals (12) aus dem Bussignal (11) durch Überkoppeln des Bussignals (11) von einer primärseitigen Leiterstruktur (15) der Koppeleinheit (5) zu einer sekundärseitigen Leiterstruktur (16) der Koppeleinheit (5),
Erzeugen (S3) eines aufbereiteten Bussignals (13) durch Aufbereiten des übergekoppelten Bussignals (12) durch eine Signalaufbereitungseinheit (6),
Erzeugen (S4) von dekodierten Busdaten (14) durch Dekodieren von Busdaten aus dem aufbereiteten Bussignal (13) und
Ausgeben (S5) der dekodierten Busdaten (14) an die Auswerteeinheit (4) über ein Schnittstellenmodul (8).
